# EUROPEAN PATENT SPECIFICATION

(11) **EP 2 577 906 B1**
(45) Date of publication and mention of the grant of the patent: **15.11.2017**
(21) Application number: 10721812.5
(22) Date of filing: 31.05.2010
(51) Int. Cl.: H04L 12/14, H04W 4/24, H04M 15/00

(54) **SESSION RELATED DATA RETRIEVAL FOR ONLINE CHARGING**
SITZUNGSBEZOGENER DATENABRUF FÜR ONLINE-AUFLADUNG
RÉCUPÉRATION DE DONNÉES RELATIVES À UNE SESSION POUR FACTURATION EN LIGNE

(43) Date of publication of application: 10.04.2013
(73) Proprietor: Nokia Solutions and Networks Oy, 02610 Espoo (FI)
(72) Inventor: JUNG, Michael, 13503 Berlin (DE); ALBINUS, Christoph, 10437 Berlin (DE); SCHEIBE, Hagen, 85521 Ottobrunn (DE); SCHENDEL, Jens, 14089 Berlin (DE)
(74) Representative: Borgström, Markus
(86) International application number: PCT/EP2010/057535
(87) International publication number: WO 2011/150954

(56) References cited:
- EP-A1- 1 503 539
- EP-A1- 2 086 164
- WO-A1-2009/145785

## Description

### FIELD OF THE INVENTION

The present invention relates session related data retrieval. More specifically, the present invention relates to methods, apparatuses, a system, a related computer program product for session related data retrieval. Examples of the present invention may be applicable to procedures for online charging context in a Next Generation Intelligent Network (NGIN) architecture.

### BACKGROUND

3GPP specifies charging functionality and charging management in GSM and UMTS networks. For example, TS 32.299 specifies in detail the Diameter based offline and online charging applications for 3GPP networks. Online charging is a charging mechanism wherein charging information can affect, in real-time, the service rendered and therefore a direct interaction of the charging mechanism with session/service control is required. 3GPP defines a reference point, Ro, between a 3G network element and the online charging system (OCS). The 3G network element is referred to as charging trigger function (CTF) in the generic 3GPP online charging architecture.

For online charging the Diameter Credit Control Application (DCCA) defined in RFC 4006 is used. The basic structure follows a mechanism where the online charging client (CTF) (also referred to as the Diameter client) requests resource allocation and reports credit control information to the Online Charging System (OCS) (also referred to as the Diameter server).

The corresponding Diameter credit control application messages for the Debit / Reserve Unit Request operation is Credit-Control-Request (CCR) and for the Debit / Reserve Unit Response operation is Credit-Control-Answer (CCA) as specified in RFC 4006.

The Diameter Credit-Control Application (DCCA) specifies an approach based on a series of "interrogations":
- Initial interrogation.
- Zero, one or more interim interrogations.
- Final interrogation.

In addition to a series of interrogations, also a one time event (interrogation) can be used e.g. in the case when service execution is always successful.

All of these interrogations use Credit*-Control-Request* and *Credit-Control-Answer* messages. The *Credit-Control-Request* for the "interim interrogation" and "final interrogation" reports the actual number of "units" that were used, from what was previously reserved. This determines the actual amount debited from the subscriber's account.

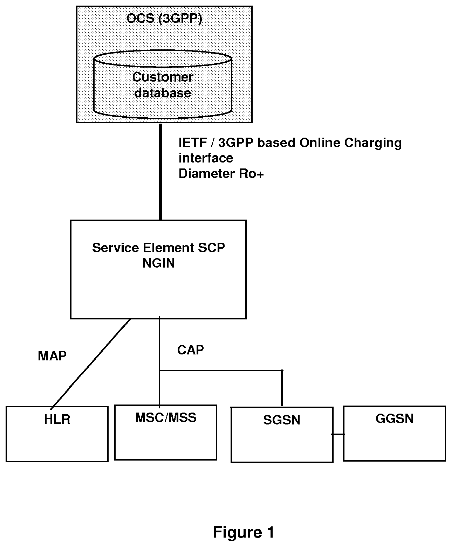

Figure 1 shows a network architecture for online charging. It consists of three layers: Core network elements, MSC, SGSN etc; the Next Generation IN (NGIN) and an Online Charging Server (OCS). In this architecture, NGIN is the network element that provides the charging trigger function defined by 3GPP. The NGIN is an entity that acts as a mediation and call control device between SS7/CAP/MAP and IP/Diameter. It contains classical SS7 based Service Control/Execution Point (SCP or SEP) functionality as well as a Diameter client capabilities. The NGIN is controlled to a certain extent by the Online Charging System (OCS). The OCS realizes the required rating and charging information for the subscribers of the IN domain.

This architecture separates the functions of classical call control and charging. The online charging interface between NGIN and OCS (designated Ro+) conveys charging related data (e.g., units granted and used) as well as other rating information, i.e., service and access specific data.

However, the above network architecture has the drawback that the NGIN is not subscriber data aware. This means that any specific processing based on subscription information has to be controlled by the OCS. For example, for location based charging scenarios, the OCS may want to take the location of the called subscriber (usually referred to as subscriber B) beside the calling subscriber (usually referred to as subscriber A) into account. In this case, locations of both subscribers are needed on the NGIN (as a mediator) and OCS for accurate processing. However, CAMEL application protocol (CAP) and Diameter credit control application (DCCA) basically provide calling subscriber related data only, i.e., the request messages towards NGIN and OCS will contain location of A-Subscriber only. Hence the OCS will not be able to realize location based charging services taking A and B location into account.

It may be noted that one of the prior solutions proposes a procedure wherein the online charging system (OCS) contacts the home location register (HLR) to obtain the subscriber B specific data and utilizes this information for charging. However, this solution is undesirable, since the OCS is defined to handle charging tasks and not much of network signaling. In the future when new network elements are introduced, the OCS contacting those new network elements will necessitate definition of new interfaces at OCS. Therefore, it is desirable that the NGIN communicates with the network elements and OCS handles only charging related tasks.

Thus, there is a need for a method by which online charging based on subscriber data of both the calling subscriber and called subscriber can be realized.

The EP 2 086 164 A1 discloses a charging system which includes an access apparatus, a control apparatus and a charging apparatus. The access apparatus is adapted to enable an access of a UE, and notify a tariff of a service currently used by the UE to the UE. The control apparatus is adapted to obtain user information corresponding to the UE and service information corresponding to the current service according to the UE and the current service. The charging apparatus is adapted to send a tariff notification message to the control apparatus according to the user information and service information obtained by the control apparatus.

### SUMMARY

In consideration of the above, it is an object of examples of the present invention to overcome one or more of the above drawbacks. In particular, the present invention provides methods, apparatuses, and a related computer program product for session related data retrieval as defined in the appended claims.

### BRIEF DESCRIPTION OF THE DRAWINGS

Examples of the present invention are described herein below with reference to the accompanying drawings, in which:
Fig. 1 shows a online charging architecture, according to the present invention, wherein the NGIN performs the charging trigger function specified by 3GPP;
Fig. 2 shows methods according to an example of the present invention for retrieval of subscriber location;
Fig. 3 shows alternative methods according to an example of the present invention for retrieval of subscriber location; and
Fig. 4 shows apparatuses according to an example of the present invention for retrieval of subscriber location.

### DETAILED DESCRIPTION OF THE PRESENT INVENTION

Examples of the present invention are described herein below by way of example with reference to the accompanying drawings.

It is to be noted that for this description, the terms "credit control request message or reauthorization answer message; credit control answer message or reauthorization request message; location of a subscriber; NGIN; OCS; ATI; HLR" are examples for "request message; answer message; missing subscriber related information; online charging client; online charging server; interrogation; network element comprising a subscriber data repository", respectively, without restricting the latter-named terms to the special technical or implementation details imposed to the first-named terms.

Figure 1 shows an exemplary architecture that can be employed for the various examples of the present invention. In this architecture, the next generation IN (NGIN), which performs the charging trigger function for the online charging context, connects with an mobile switching centre (MSC) of a GSM or 3G mobile network using camel application protocol (CAP) on the signaling system no. 7 (SS7) side. The online charging system (OCS) connects to the NGIN by means of online charging Diameter protocol (Diameter Credit Control Application, DCCA) using Credit Control Request (CCR) and Credit Control Answer (CCA) message pairs. Also shown in figure 1 is the connection between the NGIN and a subscriber data base (home location register, HLR in case of GSM networks) using mobile application part (MAP) protocol.

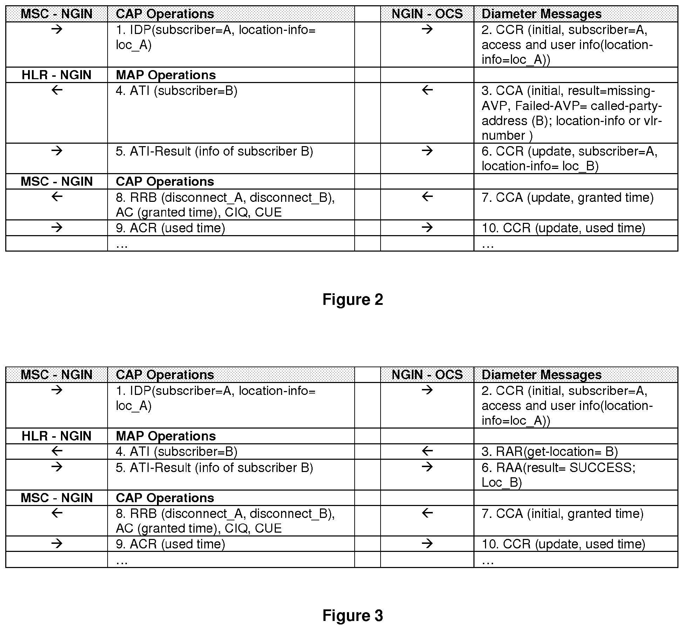

Figure 2 shows the procedure for online charging context in an NGIN (decentralized IN) architecture. In step 1, the network element performing the charging trigger function, e.g., the NGIN, receives a session initiation request. The session initiation may be done by a network element. In figure 2, the session initiation is shown as done using an initial detection point (IDP) message by the mobile switching centre (MSC). In step 2, the NGIN sends a credit control request message towards the online charging system OCS. This message includes the location information of the calling subscriber. The subscriber initiating the session is designated as subscriber A. As can be seen from the figure, the initial requests IDP (1) and CCR (2) contain location data of subscriber A only.

In the scenarios considered in the prior art, the Online charging system (OCS) returns credit control answer message to NGIN with the granted units. However, for example, in a location based charging scenarios, the OCS not only needs the location of subscriber A but also the location of the called subscriber (designated as subscriber B). Since the CAP and DCCA provide only data related to subscriber A, the OCS will not be able to realize location based charging for services taking the location of both A and B into account.

Step 3 in figure 3 shows that the OCS sends a credit control answer (CCA) which includes a missing attribute value pair (AVP) indication (IETF Standard error indication) including the referenced party and the expected AVP(s) containing the location information. The OCS makes use of grouping the relevant AVP in a failed AVP (IETF standard AVP). The failed AVP is constructed by grouping a plurality of AVPs in this example as follows:

```
 [Failed-AVP]
     [Called-Party-Address] // contains the party the info is requested for
     [3GPP-User-Location-Info] // depending on use case the expected info shall be requested,
     [VLR-Number] // e.g. cell id or vlr number, this AVP are empty in the request
```

In order to prevent violation of basic Diameter state machine Missing AVP result code indication is set on Multiple Services Credit Control (MSCC) level (whereas Failed-AVP is only available on command level):

| | |
|---|---|
| The result Code on command level shall be | DIAMETER_LIMITED_SUCCESS (2002) |
| The Result-Code on MSCC level shall be | DIAMETER_MISSING_AVP (5005) |

On receipt of the CCA from the OCS, the NGIN initiates a procedure to retrieve the location information of subscriber B. In step 4, the NGIN using MAP operations sends an anytime interrogation (ATI) to a network element that contains a subscriber data repository (HLR in case of GSM mobile networks) requesting the location of subscriber B. In step 5, the NGIN receives the ATI-result containing information about subscriber B (e.g., location information of subscriber B).

It may be noted that the any one of the procedures for interrogation and receiving the ATI result can be direct or indirect, depending on the location of HLR and the interaction between NGIN and HLR. In an indirect interrogation procedure, NGIN may send the interrogation through an intermediate network element or a plurality of intermediate network elements and/or receive the ATI answer through an intermediate network element or a plurality of intermediate network elements.

In step 6, the NGIN reports the information received from the subscriber data repository in an update credit control request (CCR). Thus, the OCS is aware of the location of subscriber B and can apply charging based on the location of both subscriber A and B. In step 7, the OCS sends an update credit control answer including the granted time. Subsequent to this, the session delivery happens. The termination CCR and CCA are not shown in the figure.

Although the anytime interrogation (ATI) has been described as occurring prior to the session delivery, in a further refinement of this example, the NGIN periodically interrogates the network element that contains the subscriber data repository (e.g., HLR) to detect any changes in the location information. Alternatively, HLR may send notification of any such change in location information to the NGIN. In case of detecting a change in the location information, the NGIN may send a further update request message to the OCS.

While the foregoing example illustrates the use case of charging based on location of subscribers, this procedure can be extended to any subscriber related parameter based on which charging should be realized.

Figure 3 shows an example wherein an alternative procedure is provided in accordance with the present invention. In this example, instead of sending a missing AVP indication, the OCS uses Reauthorization-Request (RAR) message as an immediate answer to CCR (initial). The particular request needs to be addressed by a new parameter, e.g. "get-location" (step 3). The NGIN initiates subscriber B's location retrieval (steps 4 and 5), as described in the previous example and returns the data in a Reauthorization-Answer message (RAA) with Result-Code set to SUCCESS (step 6). The result-code set to SUCCESS means that the RAR procedure is accomplished and an update CCR is not sent. Hereafter Credit Control processing continues by answering the initial CCR (step 2) with a CCA (step 7) and session delivery happens (steps 8..10...).

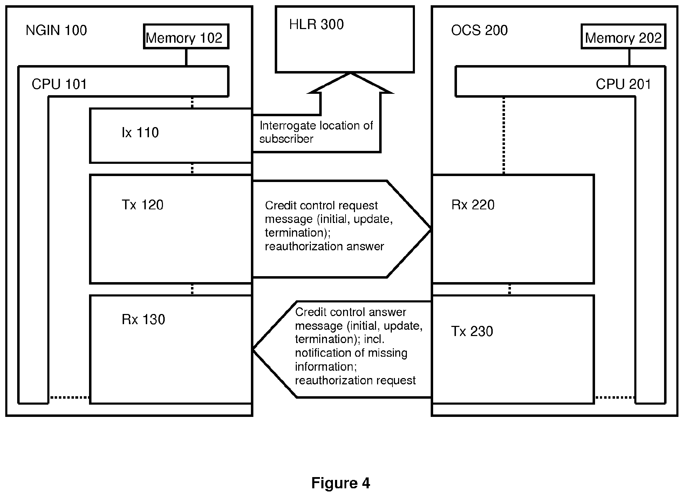

Figure 4 shows apparatuses (e.g., NGIN 100 and OCS 200) for session related data retrieval according to an example of the present invention. For sake of simplicity, only the main functions of the apparatuses are illustrated in the figure.

The NGIN 100 may comprise a CPU (or a core functionality) 101, a memory 102, an interrogator (or means for interrogating) 110, a transmitter (or means for transmitting) 120 and a receiver (or means for receiving) 130.

The OCS 200 may comprise a CPU (or core functionality) 201, a memory 202, a receiver (or means for receiving) 220, and a transmitter (or means for transmitting) 230.

Also shown in the figure is a home location register (HLR) 300, which provides a subscriber data repository. Such subscriber data repositories are well known in the art and a home subscriber server (HSS) in IMS architecture is another example which provides similar functionality.

It may be noted that the means for interrogating 110, the means for transmitting 120 and the means for receiving 130 of the NGIN 100, as well as the means for receiving 220 and the means for transmitting 230 of the OCS 200 may be functionalities running on the CPUs 101 of the NGIN and 102 of the OCS respectively, or may alternatively be separate functional entities or means. Furthermore, the means for interrogating 110 of the NGIN may be, e.g., i) a functionality residing in the means for transmitting 120 of the NGIN, ii) a functionality partly residing in the means for transmitting 120 of the NGIN and partly in the means of receiving 130 of the NGIN, or iii) may be a separate functionality of the NGIN. The means for interrogating 110, according to the present invention, may also be configured to perform detection of a change in a parameter (e.g., location of a subscriber) by interrogating the HLR.

The CPUs 101 and 201 may respectively be configured to process various data inputs and to control the functions of the memories 102 and 202, the means for transmitting 120 and 230 and the means for receiving 130 and 220. In a similar manner, the CPU 101 may be configured to process various data inputs and to control the functions of the means for interrogating 110. In figure 4, the dotted lines show optional configurations while solid lines show the core configuration according to the present invention. The memories 102 and 202 may serve e.g. for storing code means for carrying out e.g. the methods according to the example of the present invention, when run e.g. on the CPUs 101 and 201. Additionally, the memories may also store policies or rules related to a communication system. In particular, memory 201 of the OCS may store tariff information and other related information for use by operators of communication systems.

It is to be noted that the means for transmitting 120 and 230 and the means for receiving 130 and 220 may alternatively be provided as respective integral transceivers. It is further to be noted that the transmitters/receivers may be implemented i) as physical transmitters/receivers for transceiving e.g. via the air interface, ii) as routing entities e.g. for transmitting/receiving data packets e.g. in a PS (packet switched) network (e.g. between the NGIN 100 and the OCS 200 when disposed as separate network entities, or between the NGIN 100 and the HLR 300), or, iii) as any suitable combination of i) and ii).

The means for transmitting 120, for example, may perform transmitting a request message (e.g., credit control requests as shown in figure 2 or 3 at various stages of a session, or a reauthorization answer as shown in figure 3). In case of the means for interrogating 110 residing at least partly in the means for transmitting 120, the means for transmitting may also perform transmitting any time interrogation (ATI) message to HLR. The means for transmitting 120 of the present invention, in particular, may perform transmitting a request message (e.g., an update credit control request or a reauthorization answer) using the information received as part of the result of anytime interrogation.

The means for receiving 130, for example, may perform receiving a session request in the form of an IDP message as shown in figures 2 and 3. The means for receiving may also perform receiving an answer message (e.g., credit control answer as shown in figure 2 or 3, or a reauthorization request as shown in figure 3). In case of the means for interrogating 110 residing at least partly in the means for receiving 130, the means for receiving may also perform receiving the result of any time interrogation (ATI) from HLR. The means for receiving 130 of the present invention, in particular, may perform receiving an answer message, e.g., a credit control answer or a reauthorization request, indicating a missing information.

The means for receiving 220, for example, may perform receiving a request message (e.g., credit control requests as shown in figure 2 or 3 at various stages of a session, or a reauthorization answer as shown in figure 3). The means for receiving 220 of the present invention, in particular, may perform receiving a request message (e.g., an update credit control request or a reauthorization answer) including a information (e.g., location of subscriber B) needed for session establishment.

The means for transmitting 230, for example, may perform transmitting an answer message (e.g., credit control answer as shown in figure 2 or 3, or a reauthorization request as shown in figure 3). The means for transmitting 230 of the present invention, in particular, may perform transmitting an answer message, e.g., a credit control answer or a reauthorization request, indicating a missing information.

The present invention also relates to a system which may comprise the above-described NGIN 100 and the above-described OCS 200.

The present invention further relates to a computer program product. The computer program product may comprise code means for performing method steps of apparatuses, e.g., NGIN 100 and OCS 200, when run on a processing means or module.

The present invention also relates to a data structure. The data structure may be used as part of the credit control answer message sent by OCS to NGIN. The credit control answer message structure as defined by RFC 4006 and 3GPP 32.299 is shown below.

```
 <CCA> ::= < Diameter Header: 272, PXY >
            < Session-Id >
            { Result-Code }
            { Origin-Host }
            { Origin-Realm }
            { Auth-Application-Id }
            { CC-Request-Type }
            { CC-Request-Number }
            [ User-Name ]
            [ CC-Session-Failover ]
            [ CC-Sub-Session-Id ]
            [ Acct-Multi-Session-Id ]
            [ Origin-State-Id ]
            [ Event-Timestamp ]
            [ Granted-Service-Unit ]
           *[ Multiple-Services-Credit-Control ]
            [ Cost-Information ]
            [ Low-Balance-Indication ]
            [ Remaining-Balance ]
            [ Final-Unit-Indication ]
            [ Check-Balance-Result ]
            [ Credit-Control-Failure-Handling ]
            [ Direct-Debiting-Failure-Handling ]
            [ Validity-Time]
           *[ Redirect-Host]
            [ Redirect-Host-Usage ]
            [ Redirect-Max-Cache-Time ]
           *[ Proxy-Info ]
           *[ Route-Record ]
           *[ Failed-AVP ]
            [ Service-Information ]
           *[ AVP ]
```

The Multiple-Services-Credit-Control (MSCC) AVP is constructed according to RFC 4006 as follows:

```
 Multiple-Services-Credit-Control ::= < AVP Header: 456 >
           [ Granted-Service-Unit ]
           [ Requested-Service-Unit ]
           *[ Used-Service-Unit ]
           [ Tariff-Change-Usage ]
           * [ Service-Identifier ]
           [ Rating-Group ]
           * [ G-S-U-Pool-Reference ]
           [ Validity-Time ]
           [ Result-Code ]
           [ Final-Unit-Indication ]
           * [ AVP ]
```

The result code in the credit control answer message according to the present invention may comprise a first information that indicates the absence of a required information, and a second information specifying the required information. For example, the first information may be constituted by a Diameter missing attribute value pair (AVP) (identifier 5005) 5005 - IETF Standard error indication) in the Result-Code AVP within MSCC and by a diameter limited success (identifier 2002) in the Result-Code AVP on command level. The second information may be constituted by an AVP which groups the particular attribute value pair(s).

The missing attribute value pair (AVP) may include the referenced party and the expected AVP(s) containing the location information. The OCS makes use of grouping the relevant AVP in a failed AVP (IETF standard AVP). For example, the failed AVP may be constructed by grouping a plurality of AVPs in the present invention as follows:

### [ Failed-AVP ]

[Called-Party-Address] //contains the party the info is requested for
[3GPP-User-Location-Info] //depending on use case the expected info shall be requested,
[VLR-Number] //e.g. cell id or vlr number, this AVP are empty in the request

The present invention as described herein offers several advantages, some of which are listed below.

The present invention utilizes the existing IETF standard protocol elements, viz., Missing AVP indication and Failed-AVP grouping. There is no duplication or addition of new protocol elements. The existing protocol elements are used in the answer message to trigger session related data retrieval. Standard error procedures have been adapted and utilized in the invention and no modification in the basic charging procedures has been introduced. The present invention provides procedures that overcome the need to store subscriber related data in OCS or NGIN. The present invention also provides procedures whereby any useful data needed for the session initiation is provided only on need basis, thus avoiding excessive signaling and processing load on NGIN.

Although the present invention has been described herein before with reference to particular embodiments thereof, the present invention is not limited thereto and various modifications can be made thereto.

For clarity, the following table provides a survey of the abbreviations used in the above description. It is to be noted that an "s" following an abbreviation represents the plural of that abbreviation, e.g. "AVPs" represents "attribute value pairs".
- 3GPP: 3^{rd} generation partnership project
- IETF: Internet Engineering Task Force
- TS: Technical Specification
- RFC: Request For Comments (Internet Standards)
- GSM: Global System for Mobile communications
- UMTS: Universal Mobile Telecommunications system
- PS: Packet Switched
- MSC: Mobile Switching Centre
- SGSN: Serving GPRS Support Node
- SCP: Service Control Point
- SEP: Service Execution Point
- HLR: Home Location Register
- HSS: Home Subscriber Server
- VLR: Visiting Location Register
- SS7: Signaling System #7
- CAP: CAMEL application part
- MAP: Mobile Application Part
- IP: Internet Protocol
- IDP: Initial Detection Point
- DCCA: Diameter Credit Control Application
- CCA: Credit Control Answer
- CCR: Credit Control Request
- RAR: Re-authorization Request
- RAA: Re-authorization Answer
- AVP: Attribute Value Pair
- ATI: Any Time Interrogation
- CTF: Charging trigger function
- NGIN: Next Generation Intelligent Network
- OCS: Online Charging Server
- Ro: Online charging reference point (defined by 3GPP standards)
- Ro+: Online charging reference point for NGIN-OCS architecture
- CAMEL: Customised Applications for Mobile networks Enhanced Logic
- RRB: RequestReportBCSMEvent
- CIQ: CallInformationRequest
- CUE: Continue
- AC: Apply Charging
- ACR: Apply Charging Report
- MSCC: Multiple-Services-Credit-Control

## Claims

1. A method comprising:
interrogating a network element (300) for missing subscriber related information; and
receiving the missing subscriber related information,
**characterized by**:
sending a request message to an online charging server (200);
receiving an answer message from the online charging server (200) in response to the request message, the answer message including a notification of the missing subscriber related information, wherein the network element (300) is interrogated in case the answer message includes the notification;
sending an updated request message including the missing subscriber related information; and
receiving an updated answer message.

2. The method according to claim 1, further comprising:
periodically interrogating the network element for a change in the missing subscriber related information; and
sending a further updated request message indicating the change in the missing subscriber related information.

3. The method according to claim 1 or 2, wherein at least one of the following applies:
the request message is constituted by a credit control request message;
the answer message is constituted by a credit control answer message;
the answer message is constituted by a reauthorization request;
the updated request message is constituted by a update credit control request message;
the updated request message is constituted by a reauthorization answer message;
the missing subscriber related information is the location of a subscriber; and
the network element is a network element comprising a subscriber data repository.

4. An apparatus (100), comprising:
a first means (120) to send a request message; and
a second means (130) to receive an answer message,
**characterized in that**
the answer message includes a notification of missing subscriber related information and is received in response to the request message, and
the apparatus (100) further comprises:
a third means (110) to interrogate a network element (300) for the missing subscriber related information in the answer message includes the notification, and to receive the missing subscriber related information, wherein
the first means (120) is further configured to send an updated request message including the missing subscriber related information.

5. The apparatus according to claim 4, further comprising a means to detect a change in the missing subscriber related information.

6. The apparatus according to claim 4 or 5, wherein the second means is further configured to send a further update request message indicating the change in the missing subscriber related information.

7. An apparatus (200) comprising:
a means (220) to receive a request message; and
a means (230) to transmit a answer message,
**characterized in that**
the answer message includes a notification of missing subscriber related information and is transmitted in response to the request message, and the apparatus (200) comprises:
a further means (220) to receive an updated request message including the missing subscriber related information.

8. The apparatus according to any one of claims 4-7, wherein at least one of the following applies:
the request message is constituted by a credit control request message;
the answer message is constituted by a credit control answer message;
the answer message is constituted by a reauthorization request;
the updated request message is constituted by a update credit control request message;
the updated request message is constituted by a reauthorization answer message;
the missing subscriber related information is the location of a subscriber; and
the network element is a network element comprising a subscriber data repository.

9. The apparatus according to any one of the claims 4-6 or claim 8 depending on claims 4-6, wherein the apparatus is constituted by an online charging client.

10. The apparatus according to claim 7 or claim 8 depending on claim 7 wherein the apparatus is constituted by an online charging server.

11. A computer program product comprising code means for performing method steps of an apparatus according to any one of claims 1 to 3, when run on a processing means or module.

## Patentansprüche

1. Verfahren umfassend:
Abfragen eines Netzwerkelements (300) auf fehlende abonnentenspezifische Information; und
Empfangen der fehlenden abonnentenspezifischen Information,
**gekennzeichnet durch**:
Senden einer Anfragenachricht an einen Online-Abrechnungsserver (200);
Empfangen einer Antwortnachricht vom Online-Abrechnungsserver (200) als Reaktion auf die Anfragenachricht, die Antwortnachricht aufweisend eine Anzeige der fehlenden abonnentenspezifischen Information, wobei das Netzwerkelement (300) abgefragt wird, falls die Antwortnachricht die Anzeige aufweist;
Senden einer aktualisierten Anfragenachricht, welche die fehlende abonnentenspezifische Information aufweist; und
Empfangen einer aktualisierten Antwortnachricht.

2. Verfahren nach Anspruch 1, ferner umfassend:
regelmäßiges Abfragen des Netzwerkelements auf eine Änderung in der fehlenden abonnentenspezifische Information; und
Senden einer weiteren aktualisierten Anfragenachricht, welche die Änderung in der fehlenden abonnentenspezifischen Information angibt.

3. Verfahren nach Anspruch 1 oder 2, wobei mindestens einer der folgenden Punkte gilt:
die Antwortnachricht ist gebildet aus einer Guthabenkontroll-Anfragenachricht;
die Antwortnachricht ist gebildet aus einer Guthabenkontroll-Antwortnachricht;
die Antwortnachricht ist gebildet aus einer Neuautorisierungsanfrage;
die aktualisierte Anfragenachricht ist gebildet aus einer aktualisierten Guthabenkontroll-Anfragenachricht;
die aktualisierte Anfragenachricht ist gebildet aus einer Neuautorisierungs-Antwortnachricht;
die fehlende abonnentenspezifische Information ist der Standort eines Abonnenten; und
das Netzwerkelement ist ein Netzwerkelement umfassend einen Abonnentendatenspeicher.

4. Vorrichtung (100), umfassend:
ein erstes Mittel (120) zum Senden einer Anfragenachricht; und
ein zweites Mittel (130) zum Empfangen einer Antwortnachricht,
**dadurch gekennzeichnet, dass**
die Antwortnachricht eine Anzeige einer fehlenden abonnentenspezifischen Information aufweist und als Reaktion auf die Anfragenachricht empfangen wird, und
die Vorrichtung (100) ferner umfasst:
ein drittes Mittel (110) zum Abfragen eines Netzwerkelements (300) auf die fehlende abonnentenspezifische Information in der Antwortnachricht, die die Anzeige aufweist, und zum Empfangen der fehlenden abonnentenspezifischen Information, wobei
das erste Mittel (120) ferner derart ausgebildet ist, dass es eine aktualisierte Anfragenachricht, welche die fehlende abonnentenspezifische Information aufweist, sendet.

5. Vorrichtung nach Anspruch 4, ferner umfassend ein Mittel zur Erkennung einer Änderung in der fehlenden abonnentenspezifischen Information.

6. Vorrichtung nach Anspruch 4 oder 5, wobei das zweite Mittel ferner derart ausgebildet ist, dass es eine weitere aktualisierte Anfragenachricht, welche die Änderung in der fehlenden abonnentenspezifischen Information angibt, sendet.

7. Vorrichtung (200), umfassend:
ein Mittel (220) zum Empfangen einer Anfragenachricht; und
ein Mittel (230) zum Übermitteln einer Antwortnachricht,
**dadurch gekennzeichnet, dass**
die Antwortnachricht eine Anzeige einer fehlenden abonnentenspezifischen Information aufweist und als Reaktion auf die Anfragenachricht übermittelt wird, und die Vorrichtung (200) umfasst:
ein weiteres Mittel (220) zum Empfangen einer aktualisierten Anfragenachricht, welche die fehlende abonnentenspezifische Information aufweist.

8. Vorrichtung nach irgendeinem der Ansprüche 4 - 7, wobei mindestens einer der folgenden Punkte gilt:
die Antwortnachricht ist gebildet aus einer Guthabenkontroll-Anfragenachricht;
die Antwortnachricht ist gebildet aus einer Guthabenkontroll-Antwortnachricht;
die Antwortnachricht ist gebildet aus einer Neuautorisierungsanfrage;
die aktualisierte Anfragenachricht ist gebildet aus einer aktualisierten Guthabenkontroll-Anfragenachricht;
die aktualisierte Anfragenachricht ist gebildet aus einer Neuautorisierungs-Antwortnachricht;
die fehlende abonnentenspezifische Information ist der Standort eines Abonnenten; und
das Netzwerkelement ist ein Netzwerkelement umfassend einen Abonnentendatenspeicher.

9. Vorrichtung nach irgendeinem der Ansprüche 4 - 6 oder Anspruch 8 in Abhängigkeit der Ansprüche 4 - 6, wobei die Vorrichtung gebildet ist aus einem Online-Abrechnungsklienten.

10. Vorrichtung nach Anspruch 7 oder Anspruch 8 in Abhängigkeit von Anspruch 7, wobei die Vorrichtung gebildet ist aus einem Online-Abrechnungsserver.

11. Computerprogrammprodukt umfassend Codemittel zur Durchführung der Verfahrensschritte einer Vorrichtung nach irgendeinem der Ansprüche 1 bis 3, wenn es auf einem Verarbeitungsmittel oder -modul ausgeführt wird.

## Revendications

1. Un procédé comprenant :
l'interrogation d'un élément de réseau (300) à la recherche d'informations manquantes relatives à un abonné, et
la réception des informations manquantes relatives à un abonné,
**caractérisé par** :
l'envoi d'un message de demande à un serveur de facturation en ligne (200),
la réception d'un message en réponse à partir du serveur de facturation en ligne (200) en réponse au message de demande, le message en réponse contenant une notification des informations manquantes relatives à un abonné, l'élément de réseau (300) étant interrogé dans le cas où le message en réponse contient la notification,
l'envoi d'un message de demande actualisé contenant les informations manquantes relatives à un abonné, et
la réception d'un message en réponse actualisé.

2. Le procédé selon la revendication 1, comprenant en outre :
l'interrogation périodique de l'élément de réseau à la recherche d'une modification dans les informations manquantes relatives à un abonné, et
l'envoi d'un autre message de demande actualisé indiquant la modification dans les informations manquantes relatives à un abonné.

3. Le procédé selon la revendication 1 ou 2, dans lequel au moins une des affirmations suivantes s'applique :
le message de demande est constitué par un message de demande de vérification de crédit,
le message en réponse est constitué par un message en réponse de vérification de crédit,
le message en réponse est constitué par une demande de ré-autorisation,
le message de demande actualisé est constitué par un message de demande d'actualisation de vérification de crédit,
le message de demande actualisé est constitué par un message en réponse de ré-autorisation,
les informations manquantes relatives à un abonné sont l'emplacement d'un abonné, et
l'élément de réseau est un élément de réseau comprenant un référentiel de données d'abonné.

4. Un appareil (100), comprenant :
un premier moyen (120) destiné à l'envoi d'un message de demande, et
un deuxième moyen (130) destiné à la réception d'un message en réponse,
**caractérisé en ce que**
le message en réponse contient une notification d'informations manquantes relatives à un abonné et est reçu en réponse au message de demande, et
l'appareil (100) comprend en outre :
un troisième moyen (110) destiné à l'interrogation d'un élément de réseau (300) à la recherche des informations manquantes relatives à un abonné dans le message en réponse contenant la notification, et destiné à la réception des informations manquantes relatives à un abonné,
le premier moyen (120) étant configuré en outre de façon à envoyer un message de demande actualisé contenant les informations manquantes relatives à un abonné.

5. L'appareil selon la revendication 4, comprenant en outre un moyen destiné à la détection d'une modification dans les informations manquantes relatives à un abonné.

6. L'appareil selon la revendication 4 ou 5, dans lequel le deuxième moyen est configuré en outre de façon à envoyer un autre message de demande d'actualisation indiquant la modification dans les informations manquantes relatives à un abonné.

7. Un appareil (200) comprenant :
un moyen (220) de réception d'un message de demande, et
un moyen (230) de transmission d'un message en réponse,
**caractérisé en ce que**
le message en réponse contient une notification d'informations manquantes relatives à un abonné et est transmis en réponse au message de demande, et l'appareil (200) comprend :
un autre moyen (220) de réception d'un message de demande actualisé contenant les informations manquantes relatives à un abonné.

8. L'appareil selon l'une quelconque des revendications 4 à 7, dans lequel au moins une des affirmations suivantes s'applique :
le message de demande est constitué par un message de demande de vérification de crédit,
le message en réponse est constitué par un message en réponse de vérification de crédit,
le message en réponse est constitué par une demande de ré-autorisation,
le message de demande actualisé est constitué par un message de demande d'actualisation de vérification de crédit,
le message de demande actualisé est constitué par un message en réponse de ré-autorisation,
les informations manquantes relatives à un abonné sont l'emplacement d'un abonné, et
l'élément de réseau est un élément de réseau comprenant un référentiel de données d'abonné.

9. L'appareil selon l'une quelconque des revendications 4 à 6, ou selon la revendication 8 qui dépend des revendications 4 à 6, dans lequel l'appareil est constitué par un client de facturation en ligne.

10. L'appareil selon la revendication 7 ou selon la revendication 8 qui dépend de la revendication 7 dans lequel l'appareil est constitué par un serveur de facturation en ligne.

11. Un produit de programme informatique contenant un moyen de code destiné à l'exécution des étapes de procédé d'un appareil selon l'une quelconque des revendications 1 à 3, lorsqu'il est exécuté sur un moyen ou un module de traitement.
